# EUROPÄISCHE PATENTANMELDUNG

(11) **EP 1 997 690 A1**
(43) Veröffentlichungstag der Anmeldung: **03.12.2008**
(21) Anmeldenummer: 08104128.7
(22) Anmeldetag: 28.05.2008
(51) Int. Cl.: B60R 21/01

(54) **Verfahren und Vorrichtung zum Erkennen eines Fahrzeugüberschlags**

(30) Priorität: 29.05.2007 DE 102007024821
(71) Anmelder: Continental Automotive GmbH, 30165 Hannover (DE)
(72) Erfinder: Bonitz, Jochen, 93077, Bad Abbach (DE); Duscher, Petra, 93152, Undorf (DE); Faisst, Holger, 93161, Sinzing (DE); Paggel, Jens, 93326, Abensberg (DE)

(57) **Zusammenfassung**

Zum Erkennen eines Fahrzeugüberschlages eines Kraftfahrzeugs (2) wird eine Drehrate (RATE) des Kraftfahrzeugs (2) um eine erste Fahrzeugachse ermittelt. Ferner wird eine Beschleunigung (ACC) des Kraftfahrzeugs (2) entlang einer zweiten Fahrzeugachse ermittelt, die auf der ersten Fahrzeugachse senkrecht steht. Abhängig von der ermittelten Beschleunigung (ACC) wird die ermittelte Drehrate (RATE) modifiziert. Auf den Fahrzeugüberschlag wird erkannt, wenn die modifizierte Drehrate (RATE_MOD) größer als ein vorgegebener Schwellenwert (THD) ist. Ansonsten wird auf keinen Fahrzeugüberschlag erkannt.

## Beschreibung

Die Erfindung betrifft ein Verfahren und eine Vorrichtung zum Erkennen eines Fahrzeugüberschlags. Dazu wird eine Drehrate des Kraftfahrzeugs um eine erste Fahrzeugachse ermittelt. Ferner wird eine Beschleunigung des Kraftfahrzeuges entlang einer zweiten Fahrzeugachse ermittelt.

In einem modernen Kraftfahrzeug sind regelmäßig Sicherheitssysteme eingebaut. Die Sicherheitssysteme umfassen beispielsweise einen Airbag, einen Gurtstraffer, eine Vorrichtung zum Anlegen der Kopfstütze und/oder Sicherheitsmaßnahmen, die sich auf die Funktionalität der Brennkraftmaschine des Kraftfahrzeugs beziehen. Für derartige Sicherheitssysteme ist es regelmäßig notwendig, rechtzeitig zu erkennen, ob das Kraftfahrzeug einen Fahrzeugüberschlag durchführt.

Aus der DE 196 09 176 A1 sind ein Verfahren und eine Anordnung zum Erkennen eines Fahrzeugüberschlages bekannt. Um den Fahrzeugüberschlag rechtzeitig und mit hoher Zuverlässigkeit erkennen zu können, sind Beschleunigungssensoren vorgesehen, welche die Beschleunigungen des Fahrzeugs in Richtung seiner Gierachse, seiner Wankachse und seiner Nickachse messen. Außerdem ist mindestens ein Drehratensensor vorgesehen, der die Winkelgeschwindigkeit des Fahrzeugs bezüglich seiner Wankachse und evtl. zusätzlich bezüglich seiner Nickachse misst.

Aus der DE 100 25 260 A1 ist ein Verfahren zur Detektion von Überrollvorgängen bei Kraftfahrzeugen mit Sicherheitseinrichtungen bekannt. Zu einem die Initiallage eines Fahrzeuges angebenden Anfangslagewinkel wird ein integriertes Drehratensignal hinzuaddiert, so dass der zum augenblicklichen Neigungswinkel proportionale Wert mit einer drehratenabhängigen Auslöseschwelle verglichen werden kann. Wird diese Auslöseschwelle von dem Summenwert überschritten, erfolgt eine Auslösung einer Sicherheitseinrichtung.

Es ist Aufgabe der Erfindung, ein Verfahren und eine Vorrichtung zum Erkennen eines Fahrzeugüberschlages zu schaffen, das beziehungsweise die einfach zu einem zuverlässigen Erkennen des Fahrzeugüberschlages beiträgt.

Die Aufgabe wird gelöst durch die Merkmale der unabhängigen Ansprüche. Vorteilhafte Ausgestaltungen der Erfindung sind in den Unteransprüchen angegeben.

Die Erfindung zeichnet sich aus durch ein Verfahren und eine Vorrichtung zum Erkennen eines Fahrzeugüberschlages eines Kraftfahrzeugs. Eine Drehrate des Kraftfahrzeugs um eine erste Fahrzeugachse wird ermittelt. Eine Beschleunigung des Kraftfahrzeugs entlang einer zweiten Fahrzeugachse wird ermittelt. Die zweite Fahrzeugachse steht senkrecht auf der ersten Fahrzeugachse. Abhängig von der ermittelten Beschleunigung wird die ermittelte Drehrate modifiziert. Auf den Fahrzeugüberschlag wird erkannt, wenn die modifizierte Drehrate größer als ein vorgegebener Schwellenwert ist. Ansonsten wird auf keinen Fahrzeugüberschlag erkannt.

Die Koppelung der Drehrate mit der Beschleunigung ermöglicht, den Fahrzeugüberschlag zuverlässig und rechtzeitig zu erkennen. Ferner kann so der Fahrzeugüberschlag mit lediglich geringer Rechnerleistung und/oder mit einer günstigen Sensoranordnung erkannt werden. Die erste Fahrzeugachse ist beispielsweise eine Längsachse oder eine Querachse des Kraftfahrzeugs. Die zweite Fahrzeugachse ist beispielsweise die Längsachse, die Querachse oder eine Hochachse des Kraftfahrzeugs.

In einer vorteilhaften Ausgestaltung der Erfindung wird abhängig von der Drehrate ein Drehwinkel des Kraftfahrzeugs gegenüber einer Horizontalen ermittelt. Der Schwellenwert wird abhängig von dem ermittelten Drehwinkel vorgegeben. Dies kann dazu beitragen, zu berücksichtigen, dass bei einem großen Drehwinkel des Kraftfahrzeugs gegenüber der Horizontalen nur noch eine geringe Drehenergie nötig ist, damit es zu einem Fahrzeugüberschlag kommt.

In einer weiteren vorteilhaften Ausgestaltung der Erfindung wird der Drehwinkel des Kraftfahrzeugs gegenüber der Horizontalen abhängig von der modifizierten Drehrate ermittelt. Dies kann noch mehr dazu beitragen, zu berücksichtigen, dass bei einem großen Drehwinkel des Kraftfahrzeugs gegenüber der Horizontalen nur noch eine geringe Drehenergie nötig ist, damit es zu dem Fahrzeugüberschlag kommt.

In einer weiteren vorteilhaften Ausgestaltung der Erfindung wird abhängig von einer Bewertung der ermittelten Beschleunigung des Kraftfahrzeugs ein Bewertungswert ermittelt. Die Drehrate wird abhängig von dem ermittelten Bewertungswert modifiziert. Dies kann dazu beitragen, die Überschlagserkennung individuell an das jeweilige Kraftfahrzeug anzupassen und/oder den Fahrzeugüberschlag besonders zuverlässig zu erkennen. Die modifizierte Drehrate wird abhängig von dem Bewertungswert beispielsweise erhöht oder erniedrigt. Der Bewertungswert kann beispielsweise von einem Extrempunkt eines Verlaufs der ermittelten Beschleunigung und/oder abhängig von einer Steigung der ermittelten Beschleunigung und/oder direkt abhängig von der ermittelten Beschleunigung ermittelt werden.

In einer weiteren vorteilhaften Ausgestaltung der Erfindung wird die ermittelte Drehrate durch eine Multiplikation mit der ermittelten Beschleunigung oder mit dem ermittelten Bewertungswert modifiziert. Dies trägt dazu bei, dass die modifizierte Drehrate besonders aussagekräftig ist, da eine Entscheidung, ob sich das Kraftfahrzeug überschlägt, besonders schnell und zuverlässig getroffen werden kann. Dies kommt insbesondere daher, dass die Rollrate erhöht werden kann und/oder der Schwellenwert niedriger gewählt werden kann und dass dadurch früher auf den Fahrzeugüberschlag erkannt wird.

In einer weiteren vorteilhaften Ausgestaltung der Erfindung ist die Drehrate eine Nickrate und die Beschleunigung wird in Richtung einer Hochachse des Kraftfahrzeugs ermittelt. Dies ermöglicht, den Fahrzeugüberschlag über einen Frontstoßfänger und über einen Heckstoßfänger zu erkennen.

Die Erfindung ist im Folgenden anhand von schematischen Zeichnungen näher erläutert.

Es zeigen:
- Figur 1: ein Kraftfahrzeug,
- Figur 2: ein schematisches Blockdiagramm einer Vorrichtung zum Erkennen eines Fahrzeugüberschlags,
- Figur 3: ein Flussdiagramm eines Programms zum Erkennen des Fahrzeugüberschlags,
- Figur 4: ein schematisches Blockdiagramm einer alternativen Vorrichtung zum Erkennen des Fahrzeugüberschlags.

Elemente gleicher Konstruktion oder Funktion sind figurenübergreifend mit den gleichen Bezugszeichen gekennzeichnet.

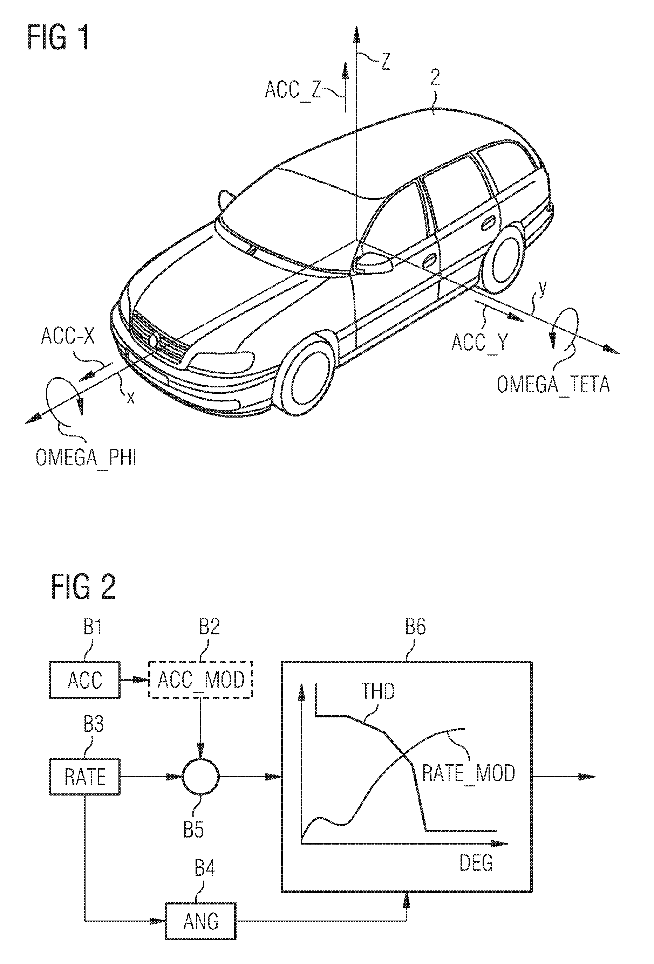

Ein Kraftfahrzeug 2 (Figur 1) weist eine Längsachse X eine Querachse Y und eine Hochachse Z auf. Falls sich das Kraftfahrzeug 2 überschlägt, also einen Fahrzeugüberschlag macht, so dreht sich das Kraftfahrzeug 2 um die Längsachse X mit einer Wankrate OMEGA_PHI und/oder um die Querachse Y mit einer Nickrate OMEGA_TETA. Gleichzeitig erfährt das Kraftfahrzeug 2 eine Beschleunigung ACC_X entlang der Längsachse X und/oder eine Beschleunigung ACC_Y entlang der Querachse Y und/oder eine Beschleunigung ACC_Z entlang der Hochachse Z.

Das Kraftfahrzeug 2 weist zumindest ein, vorzugsweise mehrere Sicherheitssysteme auf. Die Sicherheitssysteme umfassen beispielsweise zumindest einen Airbag, einen Gurtstraffer, eine Vorrichtung zum Anlegen einer Kopfstütze, und/oder Sicherheitsmaßnahmen, die sich auf die Funktionalität einer Brennkraftmaschine des Kraftfahrzeugs beziehen, beispielsweise eine automatische Drosselung und/oder Abschaltung eder Brennkraftmaschine des Kraftfahrzeugs 2. Darüber hinaus kann das Kraftfahrzeug 2 weitere Sicherheitssysteme aufweisen. Für manche der Sicherheitssysteme, beispielsweise die Gurtstraffer, ist es notwendig, dass der Fahrzeugüberschlag rechtzeitig erkannt wird. Bei anderen Sicherheitssystemen kann es auch wichtig sein, dass der Fahrzeugüberschlag nicht fälschlicherweise erkannt wird, beispielsweise bei dem Airbag.

Eine Vorrichtung zum Erkennen des Fahrzeugüberschlags umfasst vorzugsweise einen Block B1 (Figur 2), der repräsentativ ist für einen Beschleunigungssensor zum Erfassen einer Beschleunigung ACC. Die Beschleunigung ACC ist beispielsweise die Beschleunigung ACC X entlang der Längsachse X und/oder die Beschleunigung ACC_Y entlang der Querachse Y und/oder die Beschleunigung ACC_Z entlang der Hochachse Z. Die Vorrichtung kann zumindest teilweise von einer Steuervorrichtung des Kraftfahrzeugs 2 umfasst sein.

Die von dem Sensor des Blocks B1 ermittelte Beschleunigung ACC wird vorzugsweise an einen Block B2 gesendet, der repräsentativ ist für ein Auswertungsmodul, das abhängig von der Beschleunigung ACC einen Bewertungswert ACC_MOD ermittelt. Der Bewertungswert ACC MOD kann beispielsweise direkt abhängig von der Beschleunigung ACC ermittelt werden oder abhängig von Extrempunkten eines Verlaufs der Beschleunigung ACC und/oder abhängig von einer Steigung des Verlaufs der Beschleunigung ACC. Der Bewertungswert ACC_MOD dient dazu, eine Drehrate RATE abhängig von der ermittelten Beschleunigung ACC zu modifizieren. Die Drehrate RATE ist beispielsweise die Nickrate OMEGA_TETA oder die Wankrate OMEGA_PHI. Wesentlich ist, dass die Fahrzeugachse entlang der die Beschleunigung ACC ermittelt wird, senkrecht auf der Fahrzeugachse steht um die sich das Kraftfahrzeug 2 mit der Drehrate RATE dreht. Beispielsweise ist die Drehrate RATE die Nickrate OMEGA_TETA und die ermittelte Beschleunigung ACC ist die Beschleunigung ACC_Z entlang der Hochachse Z des Kraftfahrzeugs 2. Alternativ zu dem Block B2 kann die ermittelte Beschleunigung ACC zum Modifizieren der Drehrate RATE direkt an einen Block B5 gesendet werden.

Der Bewertungswert ACC_MOD trägt der Tatsache Rechnung, dass sich vorgegebene Szenarien, beispielsweise eine Fahrt über eine Rampe, ein Bordsteinanprall und/oder eine Böschungsfahrt in dem Verlauf des Beschleunigungswerts wieder spiegeln. Diese Szenarien können in dem Block B2 erkannt werden. Abhängig von dem erkannten Szenario kann dann in dem Block B2 die ermittelte Beschleunigung ACC so modifiziert werden, dass die Drehrate RATE passend zu dem erkannten Szenario modifiziert wird. Insgesamt erhöht dies die Zuverlässigkeit für das erkennen des Fahrzeugüberschlags, was auch zu einem schnellen Erkennen des Fahrzeugüberschlags beiträgt, da die Drehrate RATE dann stärker modifiziert werden kann und/oder der Schwellenwert THD größer gewählt werden kann, so dass früher auf den Fahrzeugüberschlag erkannt werden kann, als ohne die Modifikation der Drehrate RATE. Wie die Beschleunigung ACC abhängig von dem Szenario zu modifizieren ist, kann beispielsweise mittels Crashtest ermittelt, aufgezeichnet und ausgewertet werden.

Ein Block B3 ist repräsentativ für einen Drehratensensor zum Ermitteln der Drehrate RATE.

Ein Block B4 umfasst eine Integriervorrichtung und ermittelt abhängig von der ermittelten Drehrate RATE einen aktuellen Drehwinkel ANG des Kraftfahrzeugs 2 gegenüber einer Horizontalen.

In einem Block B5 wird die Drehrate RATE mit der Beschleunigung ACC und/oder mit dem Bewertungswert ACC_MOD modifiziert. Beispielsweise kann die Drehrate RATE mit dem Bewertungswert ACC_MOD multipliziert werden. Falls der Bewertungswert ACC_MOD beispielsweise die Werte zwischen Null und Zwei annehmen kann, so bedeutet dies, dass im einen Extremfall abhängig von der Beschleunigung ACC die Drehrate RATE mit Null multipliziert wird und somit verschwindet und dass im anderen Extremfall die Drehrate RATE verdoppelt wird. An einem Ausgang des Blocks B5 kann dann eine modifizierte Drehrate RATE_MOD ausgelesen werden.

Ein Block B6 ist repräsentativ für ein Kennfeld, das auf einer Speichervorrichtung der Vorrichtung abgelegt ist. Auf einer X-Achse des Kennfelds sind Winkelgrade DEG angetragen und auf einer Y-Achse des Kennfeldes sind skalare Werte angetragen. Ein Schwellenwert THD weist einen Verlauf auf, der von dem aktuellen Drehwinkel ANG des Kraftfahrzeugs 2 abhängt. Damit wird der Tatsache Rechnung getragen, dass bei einem großen Drehwinkel ANG des Kraftfahrzeugs 2 gegenüber der Horizontalen nur noch eine geringe Drehung des Kraftfahrzeugs 2 nötig ist, damit sich das Kraftfahrzeug 2 überschlägt. Ferner wird in dem Block B6 die modifizierte Drehrate RATE MOD mit dem Schwellenwert THD verglichen. Falls die modifizierte Drehrate RATE MOD größer ist als der Schwellenwert THD, so wird auf den Fahrzeugüberschlag erkannt. Das Kennfeld und gegebenenfalls weitere Kennfelder können beispielsweise durch Crash-Tests ermittelt werden. Alternativ zu dem Kennfeld kann empirisch ein entsprechendes Modell ermittelt werden, anhand dessen die modifizierte Drehrate RATE_MOD mit dem Schwellenwert THD verglichen werden kann.

Ein isoliertes Überwachen der Wankrate OMEGA_PHI und/oder der Nickrate OMEGA_TETA kann genauso zu einem unzuverlässig Erkennen des Fahrzeugüberschlags beitragen wie ein isoliertes Betrachten der Beschleunigungen entlang der genannten Fahrzeugachsen. Insbesondere kann ein Signal des Drehratensensors zum Plausibilisieren eines Signals des Beschleunigungssensors verwendet werden.

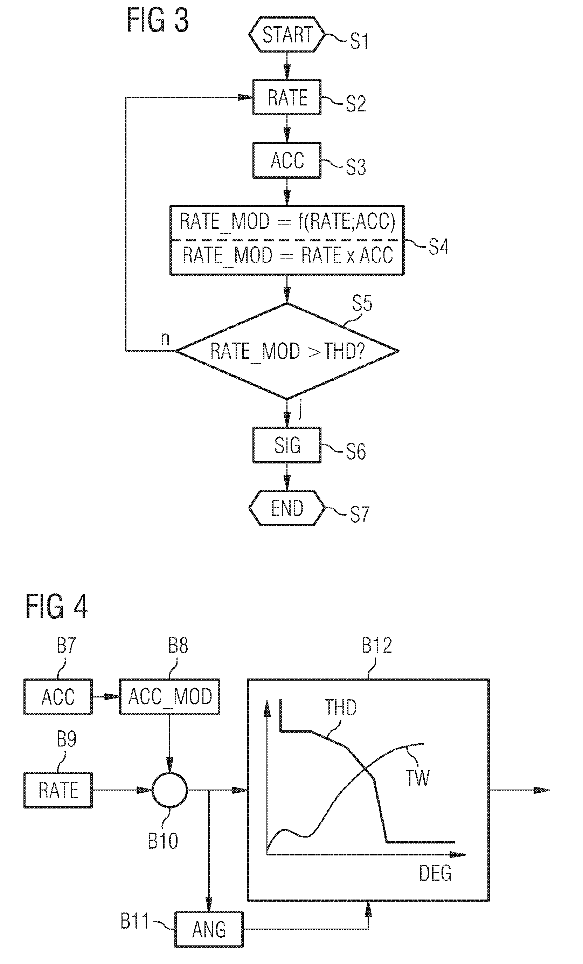

Daher ist auf der Speichervorrichtung der Vorrichtung ein Programm zum Erkennen des Fahrzeugüberschlags abgespeichert (Figur 3). Das Programm dient dazu, zumindest eine der Drehraten RATE, beispielsweise die Nickrate OMEGA_TETA und/oder die Wankrate OMEGA PHI so mit zumindest einer der Beschleunigungen ACC entlang der Fahrzeugachsen zu verknüpfen, dass der Fahrzeugüberschlag rechtzeitig und präzise erkannt wird.

Das Programm wird vorzugsweise bei einem Motorstart der Brennkraftmaschine des Kraftfahrzeugs 2 in einem Schritt S1 gestartet, in dem gegebenenfalls Variablen initialisiert werden.

In einem Schritt S2 wird die Drehrate RATE um eine der Fahrzeugachsen ermittelt. Beispielsweise wird die Nickrate OMEGA_TETA um die Querachse Y des Kraftfahrzeugs 2 ermittelt.

In einem Schritt S3 wird die Beschleunigung ACC entlang einer der Fahrzeugachsen ermittelt, beispielsweise wird die Beschleunigung ACC_Z entlang der Hochachse Z ermittelt. Ferner kann in dem Schritt S3 abhängig von der ermittelten Beschleunigung ACC der Bewertungswert ACC_MOD ermittelt werden.

In einem Schritt S4 wird die Drehrate RATE abhängig von der Beschleunigung ACC modifiziert, vorzugsweise nach der in dem Schritt S4 angegebenen Berechnungsvorschrift. Danach wird beispielsweise die ermittelte Nickrate OMEGA_TETA mit der Beschleunigung ACC Z entlang der Hochachse Z des Kraftfahrzeugs 2 multipliziert. Alternativ dazu kann die ermittelte Drehrate RATE abhängig von dem Bewertungswert ACC MOD modifiziert werden. Beispielsweise wird dann die ermittelte Nickrate OMEGA_TETA mit dem Bewertungswert ACC_MOD multipliziert..

In einem Schritt S5 wird beispielsweise anhand des Kennfeldes überprüft, ob eine modifizierte Drehrate RATE MOD größer als ein vorgegebener Schwellenwert THD ist. Ist die Bedingung des Schritts S5 erfüllt, so wird die Bearbeitung in einem Schritt S6 fortgesetzt. Ist die Bedingung des Schritts S5 nicht erfüllt, so wird das Programm erneut in dem Schritt S2 abgearbeitet.

In einem Schritt S6 wird ein Signal SIG erzeugt, das repräsentativ für den Fahrzeugüberschlag ist. Vorzugsweise wird das Signal SIG an die Sicherheitssysteme weitergeleitet.

In einem Schritt S7 kann das Programm beendet werden. Vorzugsweise wird das Programm jedoch regelmäßig während des Betriebs des Kraftfahrzeugs 2 abgearbeitet.

Bei einer alternativen Ausführungsform (Figur 4) wird der Drehwinkel ANG abhängig von der modifizierten Drehrate RATE_MOD ermittelt. Dabei entsprechen die Blöcke B7, B8 und B9 den Blöcken B1, B2 beziehungsweise B3. Der Block B10 entspricht dem Block B5. In dem Block B11 wird abhängig von der modifizierten Drehrate RATE MOD der Drehwinkel ANG ermittelt. Der Block B12 entspricht dem Block B6. Dies kann dazu beitragen, den Fahrzeugüberschlag noch zuverlässiger und/oder noch schneller zu erkennen, da die Drehrate RATE noch stärker modifiziert werden kann und/oder der Schwellenwert THD noch kleiner gewählt werden kann.

Die Erfindung ist nicht auf die angegebenen Ausführungsbeispiele beschränkt. Beispielsweise kann zum Erkennen des Fahrzeugüberschlags jede beliebige der Drehraten RATE und jede beliebige der Beschleunigungen ACC herangezogen werden. Ferner kann die Vorrichtung gemäß Figur 2 auch ganz oder teilweise als Softwareprodukt umgesetzt sein und auf der Steuervorrichtung abgespeichert sein. Ferner können zwischen den Blöcken B1 bis B6 ein oder mehrer Filter angeordnet sein. Der Filter kann beispielsweise einen Tiefpassfilter und/oder einen Hochpassfilter umfassen.

## Patentansprüche

1. Verfahren zum Erkennen eines Fahrzeugüberschlages eines Kraftfahrzeugs (2), bei dem
- eine Drehrate (RATE) des Kraftfahrzeugs (2) um eine erste Fahrzeugachse ermittelt wird,
- eine Beschleunigung (ACC) des Kraftfahrzeugs (2) entlang einer zweiten Fahrzeugachse ermittelt wird, die auf der ersten Fahrzeugachse senkrecht steht,
- abhängig von der ermittelten Beschleunigung (ACC) die ermittelte Drehrate (RATE) modifiziert wird,
- auf den Fahrzeugüberschlag erkannt wird, wenn die modifizierte Drehrate (RATE_MOD) größer als ein vorgegebener Schwellenwert (THD) ist,
- ansonsten auf keinen Fahrzeugüberschlag erkannt wird.

2. Verfahren nach Anspruch 1, bei dem abhängig von der Drehrate (RATE) ein Drehwinkel (ANG) des Kraftfahrzeugs (2) gegenüber einer Horizontalen ermittelt wird und bei dem der Schwellenwert (THD) abhängig von dem Drehwinkel (ANG) vorgegeben wird.

3. Verfahren nach Anspruch 2, bei dem der Drehwinkel (ANG) des Kraftfahrzeugs (2) gegenüber der Horizontalen abhängig von der modifizierten Drehrate (RATE) ermittelt wird.

4. Verfahren nach einem der vorstehenden Ansprüche, bei dem abhängig von einer Bewertung der ermittelten Beschleunigung (ACC) des Kraftfahrzeugs (2) ein Bewertungswert (ACC_MOD) ermittelt wird und bei dem die ermittelte Drehrate (RATE) abhängig von dem ermittelten Bewertungswert (ACC_MOD) modifiziert wird.

5. Verfahren nach einem der vorstehenden Ansprüche, bei dem die ermittelte Drehrate (RATE) durch eine Multiplikation mit der ermittelten Beschleunigung (ACC) oder mit dem Bewertungswert (ACC_MOD) modifiziert wird.

6. Verfahren nach einem der vorstehenden Ansprüche, bei dem die ermittelte Drehrate (RATE) eine Nickrate (OMEGA_TETA) des Kraftfahrzeugs (2) repräsentiert und bei dem die ermittelte Beschleunigung (ACC) eine Beschleunigung (ACC_Z) in Richtung einer Hochachse (Z) des Kraftfahrzeugs (2) repräsentiert.

7. Vorrichtung zum Erkennen eines Fahrzeugüberschlages eines Kraftfahrzeugs (2), wobei die Vorrichtung dazu ausgebildet ist
- eine Drehrate (RATE) des Kraftfahrzeugs (2) um eine erste Fahrzeugachse zu ermitteln,
- eine Beschleunigung (ACC) des Kraftfahrzeugs (2) entlang einer zweiten Fahrzeugachse zu ermitteln, die auf der ersten Fahrzeugachse senkrecht steht,
- die ermittelte Drehrate (RATE) abhängig von der ermittelten Beschleunigung (ACC) zu modifizieren,
- auf den Fahrzeugüberschlag zu erkennen, wenn die modifizierte Drehrate (RATE_MOD) größer als ein vorgegebener Schwellenwert (THD) ist,
- ansonsten auf keinen Fahrzeugüberschlag zu erkennen.
